(19) Europäisches Patentamt

European Patent Office

Office européen des brevets

(11) Veröffentlichungsnummer: **0 289 456 B1**

(12)

# EUROPÄISCHE PATENTSCHRIFT

(45) Veröffentlichungstag der Patentschrift:
24.04.91 Patentblatt 91/17

(21) Anmeldenummer: 88810210.0

(22) Anmeldetag: 30.03.88

(51) Int. Cl.⁵: **F28D 15/02, B29C 65/18,**
**B29C 65/26**

(54) Siegelbacke für Verpackungsmaschinen.

(30) Priorität: 28.04.87 CH 1631/87

(43) Veröffentlichungstag der Anmeldung:
02.11.88 Patentblatt 88/44

(45) Bekanntmachung des Hinweises auf die
Patenterteilung:
24.04.91 Patentblatt 91/17

(84) Benannte Vertragsstaaten:
BE CH DE ES FR GB IT LI NL

(56) Entgegenhaltungen:
DE-A- 3 017 043
FR-A- 2 378 248
US-A- 3 613 778

(56) Entgegenhaltungen:
US-A- 3 834 457
US-A- 4 046 190
US-A- 4 288 968
US-A- 4 461 343
US-A- 4 523 636

(73) Patentinhaber: SIG Schweizerische
Industrie-Gesellschaft
CH-8212 Neuhausen am Rheinfall (CH)

(72) Erfinder: Dietzsch, Claudius R.
Chlingehalde 801
CH-8260 Stein am Rhein (CH)

(74) Vertreter: White, William et al
Patentanwalts-Bureau Isler AG Postfach 6940
CH-8023 Zürich (CH)

## Beschreibung

Die vorliegende Erfindung betrifft eine Heissiegelbacke gemäss dem Oberbegriff des unabhängigen Patentanspruchs 1.

Bei Heissiegelvorrichtungen in der Verpackungsindustrie sind beheizte Siegelkörper entweder als Scheiben oder als rotierende Backen ausgebildet. In beiden Ausführungsformen sind in die metallischen Körper Heizelemente eingebaut, so dass die Siegelflächen entsprechend beheizt sind.

Es ist aber sehr schwer, bei den hohen Geschwindigkeiten, mit denen heute in der Verpackungsindustrie gearbeitet wird und den oft recht komplizierten Formen der Siegelbacken die Temperatur an den Arbeitsgebieten konstant zu halten.

Um dies zu verbessern wurde in der DE-A-30 17 043 vorgeschlagen, im Siegelkörper und nahe seiner Siegelfläche eine geschlossene, eine unter Unterdruck stehende Arbeitsflüssigkeit enthaltende geschlossene Kammer vorzusehen. Da diese Kammer somit Gas und Flüssigkeit enthält, kann mit ihr Wärmeenergie gespeichert werden, so dass das Heissiegeln immer bei gleicher Temperatur stattfinden kann.

Der Wärmetransport von der näher am Rotationszentrum angeordneten Heizung zu dieser Kammer erfolgt durch Aufheizen des ganzen Siegelkörpers, der damit zu einem relativ grossen Wärmeverlust durch Abstrahlung führen kann.

Eine andere Ausführungsform für einen Wärmeenergietransport ist in der FR-A 2 378 248 beschrieben. Demgemäss ist vorgesehen, in ein flaches Gehäuse eine netzförmige Kapillarstruktur einzulegen, die sich den Wänden entlang erstrecken. Durch Erwärmen einer verdampfbaren Flüssigkeit wird die Wärme zum kalten Bereich transportiert und dort durch Kondensation freigegeben. Die kondensierte Flüssigkeit wird dann durch die Kapillarstruktur an die beheizte Stelle zurücktransportiert. Obwohl damit ein sehr vorteilhaftes Wärmeenergietransport-System geschaffen werden kann, genügt eine solche Anordnung für die Beheizung vom Siegelbacken nicht, weil ausser der Kapillarwirkung noch die Zentrifugalkraft und das Trägheitsmoment auf die Flüssigkeit einwirken.

Es ist deshalb die Aufgabe der Erfindung, eine Transport-anordnung für Wärmeenergie zu schaffen, die unabhängig von Schwerkraft, Zentrifugalkraft oder von dem Trägheitsmoment Wärmeenergie von einer ersten Stelle zu einer zweiten Stelle zu transportieren vermag.

Erfindungsgemäss wird dies durch die Merkmale im kennzeichnenden Teil des Patentanspruchs 1 bewirkt.

Ausführungsbeispiele der Erfindung werden nachfolgend anhand der Zeichnung erläutert. Es zeigen :

Fig. 1 perspektivische Darstellung in auseinandergezogener Weise einer Vorrichtung für eine Heissiegelbacke,

Fig. 2 geschnittene Darstellung eines Teil der Vorrichtung nach Fig. 1 in vergrössertem Massstab,

Fig. 3 geschnittene Darstellung einer Siegelbackenanordnung in einer Verpackungsmaschine mit eingebauter Vorrichtung für den Transport der Wärmeenergie,

Fig. 4 und 5 je eine geschnitten dargestellte Siegelbacke mit unterschiedlicher Anordnungen der Vorrichtung.

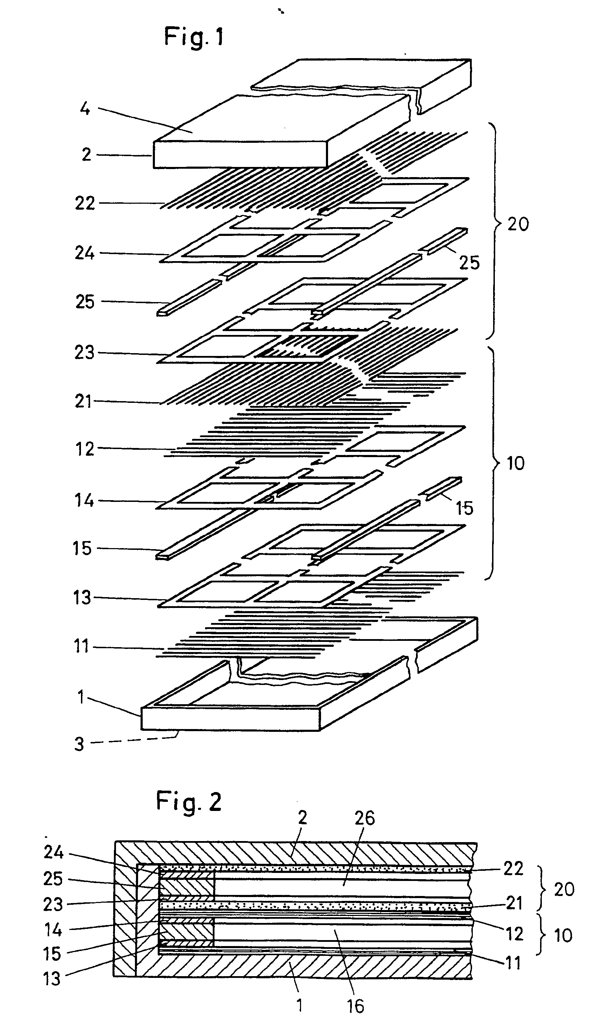

Gemäss Fig. 1 und 2 besteht das Gehäuse aus zwei Schalen 1 und 2, die gasdicht ineinandergreifend miteinander verbunden sind. Die beiden Schalen sind mit rechteckiger Boden- bzw. Deckwand ausgebildet, die beim geschlossenen Gehäuse entsprechend die Flächen 3, 4 für die Kühlung oder die Erwärmung bilden. In diesem Gehäuse sind zwei Leitsysteme 10, 20 angeordnet, um eine verdampfbare Flüssigkeit parallel zu den Flächen 3, 4 zu transportieren. Jedes dieser Leitsysteme 10, 20 umfasst zwei im Abstand voneinander gehalterte Kapillarstrukturen 11, 12, 21, 22. Im dargestellten Beispiel bestehen diese Kapillarstrukturen aus einem Bündel von flächig verteilt angeordneten sehr feinen Drähten, derart, dass sich in den Zwischenräumen feine Kapillarrohre bilden, in denen sich eine Flüssigkeit infolge von Kapillarkräften bewegen kann.

Um die Bündel von Drähten flächig ausgebreitet zu haltern, sind zwei Gerüsthalter 13, 14 und 23, 24 vorhanden, die durch streifenförmige Abstandhalter 15, 25 voneinander im Abstand gehalten sind. Es genügt ein Paar Abstandhalter 15, 25 an der Aussenwand des Gehäuses, wenn die Gerüsthalter 13, 14, 23, 24 so ausgebildet sind, dass die Drähte die ausgebreitete Lage beibehalten und sich nicht durchbiegen können.

Wie die beiden Fig. 1 und 2 zeigen, sind die Kapillarstrukturen 11, 12 und 21, 22 der beiden Leitsysteme 10, 20 gegeneinander um 90° verdreht angeordnet.

Die Wirkungsweise wird nun anhand von Fig. 2 erläutert. Durch die Gerüsthalter 13, 14, 23, 24 und die Abstandhalter 15, 25 wird in jedem Leitsystem 10, 20 ein Hohlraum 16, 26 gebildet.

Bei gesättigtem Kapillarsystem liegen auf den Kapillarstrukturen 11, 21 dünne Flüssigkeitsschichten. Bei einer Erwärmung im linken Teil in Fig. 2 verdampft dort die Flüssigkeit in den Kapillarstrukturen. Der Dampf bewegt sich infolge des entstehenden Druckgefälles gegenüber dem kälteren nicht gezeichneten rechten Teil in diesen kälteren Bereich, kondensiert dort und erwärmt somit die Schalen 1 und 2 im rechten Teil. Auf diese Weise entsteht ein Temperaturausgleich im Gehäuse, insbesondere in der Schale 1. Das Kondensat wird in den Kapillarstrukturen 11, 12 durch Kapillarkräfte in den linken Teil zurücktransportiert. Dasselbe gilt auch dür das orthogonal Leitsystem 20, wenn gemäss Fig. 2 Wärme senkrecht zum zeichenblatt transportiert wird, zu diesen Transportsystemen (10, 20) gehören je ein Dampfraum (16, 26) und jeweils zwei diese umschliessende, parallel zueinander gerichtete Rückflusswege (11, 12, 21, 22) für dar kondensat des Wärmeleitmediums.

Es ist leicht eizusehen, dass diese beschriebene Lage nicht die einzige Lage der Vorrichtung für das Funktionieren ist. Die Wärme wird in jeder Richtung zwischen einer warmen Zone und einer kalten Zone transportiert, also zum Beispiel auch quer über das Gehäuse zwischen zwei sich gegenüberliegenden Stirnseiten. Infolge der gerichteten Kapillarkräfte wird die kondensierte Flüssigkeit in die Verdampfungszone zurücktransportiert.

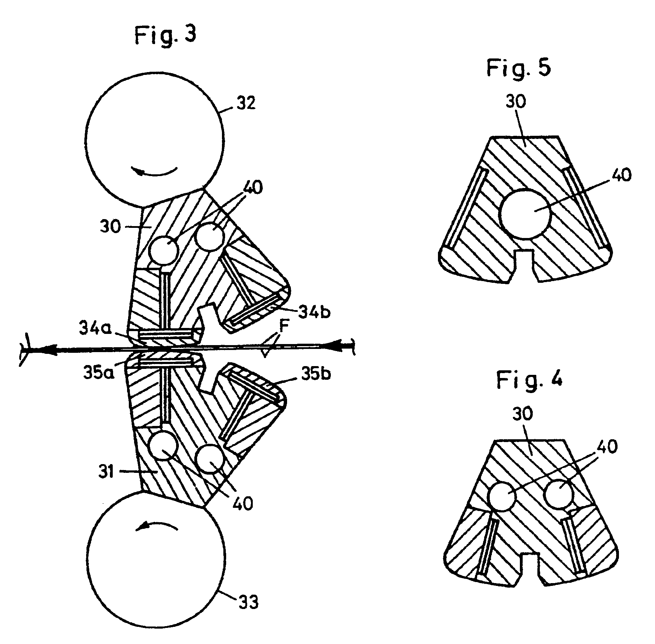

Fig. 3 zeigt in vereinfacher Weise eine Siegelstation in einer Verpackungsmaschine zur Herstellung von zwei im Abstand sich folgenden Quersiegelnähten. Zwei Siegelbacken 30, 31 sind an zwei gegensinnig rotierenden Wellen 32, 33 befestigt und die Siegelflächen 34a, b und 35a, b rollen dementsprechend aufeinander ab. Zwei aufeinanderliegende heissiegelfähige Folien F, die zwischen den Siegelbacken 30, 31 durchgezogen werden, werden dadurch an zwei aufeinanderfolgenden Stellen zusammengeschweisst. Solche Siegelbacken sind bekannt und beispielsweise in der EP-A-55211 beschrieben.

Die Erhitzung der Backen erfolgte bisher durch Heizstäbe 40, die parallel zur Drehachse bzw. parallel zu den Siegelflächen angeordnet sind. Die Wärmeenergie breitete sich demnach über die ganze Backe aus.

Mit Benützung der vorangehend beschriebenen Erfindung kann die Wärmeenergie gezielt zu den Siegelbacken transportiert werden.

In Fig. 3 sind pro Siegelfläche eine radial und eine tangential angeordnete Vorrichtung zum Transport der Wärmeenergie vorhanden. Damit wird die Wärme von den Heizstäben gezielt an die Verbrauchstelle transportiert und bei den Siegelflächen gleichmässig über die ganze Fläche des Gehäuses verteilt und auf die Siegelfläche übertragen. Es kann selbstverständlich je eine radial und eine tangential angeordnete Vorrichtung zum wärmeenergie-Transport vorgesehen sein, deren Abmessungen so gross sind, dass die Siegelfläche gleichmässig erwärmt wird. Es könnten aber auch mehrere kleinere Vorrichtungen hintereinander vorgesehen sein.

In Fig. 4 und 5 sind weitere Varianten der Anordnung von Heizstäben 40 in Siegelbacken 30 und Vorrichtungen zum Transport von Wärmeenergie dargestellt.

## Ansprüche

1. Heissiegelbacke (30, 31) in Verpackungsmaschinen mit einer Wärmeenergie-Transportvorrichtung für die Erwärmung der Siegelflächen (34a, 34b, 35a, 35b) mit Wärmequellen (40), die in den Heissiegelbacken (30, 31) von den Siegelflächen (34a, 34b, 35a, 35b) beabstandet sind, dadurch gekennzeichnet, dass die Wärmeenergie-Transportvorrichtung als ein geschlossenes Gehäuse (1, 2) ausgebildet ist, das wenigstens zwei übereinander angeordnete, parallel zu zwei parallelen Wänden (3, 4) des Gehäuses (1, 2) liegende, ein Wärmeleitmedium in zwei unterschiedliche Richtungen führende Wärmeleitsysteme (10, 20) umfasst, und dass jedes Wärmeleitsystem (10, 20) mindestens eine das Wärmeleitmedium transportierende Kapillarstruktur (11, 12, 21, 22) umfasst, wobei die parallelen Wände senkrecht zur Siegelfläche angeordnet sind.

2. Siegelbacke nach Patentanspruch 1, dadurch gekennzeichnet, dass in jedem Wärmeleitsystem (10, 20) zwei das Wärmeleitmedium in gleicher Richtung transportierende, im Abstand voneinander gehalterte Kapillarstrukturen (11, 12, 21, 22) vorhanden sind.

3. Siegelbacke nach Patentanspruch 2, dadurch gekennzeichnet, dass die Kapillarstrukturen (11, 12, 21, 22) je aus einem über die gesamte Fläche ausgebreiteten Bündel Drähte gebildet sind, dass die einander zugewandten Flächen der Bündel auf je einem Gerüsthalter (13, 14, 23, 24) aufliegen, und dass die Gerüsthalter (13, 14, 23, 24) durch streifenförmige Einlagen (15, 25) im Abstand voneinander gehalten sind.

4. Siegelbacke nach Patentanspruch 3, dadurch gekennzeichnet, dass die Drähte einen Durchmesser von höchstens 0.1 mm haben.

5. Siegelbacke nach einem der Patentansprüche 1 bis 4, dadurch gekennzeichnet, dass die Leitsysteme (10, 20) um 90° gegeneinander verdreht angeordnet sind.

6. Siegelbacke nach Patentanspruch 1, dadurch gekennzeichnet, dass zusätzlich wenigstens eine Transportvorrichtung mit den paralleln Wänden parallel zur Siegelfläche angeordnet ist.

## Claims

1. Heat-sealing jaw (20, 31) in packaging machines having a heat energy conveying device for heating the sealing surfaces (34a, 34b, 35a, 35b) by heat sources (40), which are spaced apart in the heat-sealing jaws (30, 31) from the sealing surfaces (34a, 34b, 35a, 35b), characterized in that the heat energy conveying device is in the form of a closed housing (1, 2), which has at least two heat-conducting systems (10, 20), which are disposed one on top of the other, which are parallel to two parallel walls (3, 4) of the housing (1, 2) and which guide a heat-conducting medium in two different directions, and each heat-conducting system (10, 20) has at least one capillary structure (11, 12, 21, 22), wherein the parallel walls are disposed perpendicularly to the sealing surface.

2. Sealing jaw as in claim 1, characterised in that in each heat-conducting system (10, 20) two capillary structures (11, 12, 21, 22) are provided which convey the heat-conducting medium in the same direction and are mounted at a distance from one another.

3. Sealing jaw as in claim 2, characterised in that the capillary structures (11, 12, 21, 22) are each formed from a bundle of wires spread out over the entire surface, that the surfaces of the bundles facing one another each rest on one frame holder (13, 14, 23, 24) respectively, and that the frame holders (13, 14, 23, 24) are spaced apart from one another by strip-shaped inserts (15, 25).

4. Sealing jaw as in claim 3, characterised in that the wires have a maximum diameter of 0.1 mm.

5. sealing jaw as in any of claims 1 to 4, characterised in that the conducting systems (10, 20) are disposed so as to be offset form one another by 90°.

6. Sealing jaw as in claim 1, characterized in that additionally at least one conveying device is disposed with the parallel walls parallel to the sealing face.

## Revendications

1. Mâchoire de thermosoudage (30, 31) utilisée dans des machines d'emballage et comportant un dispositif de transfert d'énergie thermique servant à échauffer les surfaces de scellement (34a, 34b, 35a, 35b) et comportant des sources de chaleur (40), qui sont placées dans les mâchoires de thermosoudage (30, 31), en étant distantes des surfaces de scellement (34a, 34b, 35a, 35b), caractérisée par le fait que le dispositif de transfert d'énergie thermique est agencé sous la forme d'un boîtier fermé (1, 2), qui comporte au moins deux systèmes superposés de conduction thermique (10, 20), qui sont parallèles aux deux parois parallèles (3, 4) du boîtier (1, 2) et véhiculent un fluide de conduction thermique dans deux directions différentes, et que chaque système de conduction thermique (10, 20) comporte au moins une structure capillaire (11, 12, 21, 22), qui transfère le fluide de conduction thermique, les parois parallèles étant perpendiculaires à la surface de scellement.

2. Mâchoire de scellement selon la revendication 1, caractérisée en ce que dans chaque système de conduction thermique (10, 20), il est prévu deux structures capillaires (11, 12, 21, 22) maintenues à distance l'une de l'autre et entraînant le fluide de conduction thermique dans la même direction.

3. Mâchoire de scellement selon la revendication 2, caractérisée en ce que les structures capillaires (11, 12, 21, 22) sont constituées chacune par un faisceau de fils s'étendant sur toute la surface, que les surfaces, tournées l'une vers l'autre, du faisceau s'appliquent sur une structure respective de support (13, 14, 23, 24) et que les structures de support (13, 14, 23, 24) sont maintenues à distance les unes des autres par des inserts en forme de bandes (15, 25).

4. Mâchoire de scellement selon la revendication 3, caractérisée en ce que les fils possèdent un diamètre égal au maximum à 0,1 mm.

5. Mâchoire de scellement selon l'une des revendications 1 à 4, caractérisée en ce que les systèmes de conduction (10, 20) sont disposés en étant pivotés de 90° l'un par rapport à l'autre.

6. Mâchoire de scellement selon la revendication 1, caractérisée en ce qu'il est prévu en outre un dispositif de transfert, dont les parois parallèles sont parallèles à la surface de scellement.

## Fig. 1

## Fig. 2

Fig. 3

Fig. 5

Fig. 4